# EUROPEAN PATENT APPLICATION

(11) **EP 4 428 196 A1**
(43) Date of publication of application: **11.09.2024**
(21) Application number: 23161063.5
(22) Date of filing: 09.03.2023
(51) Int. Cl.: C08L 83/04, C08J 3/05

(54) **SHEAR THINNING TWO-PHASE COMPOSITION AND PRODUCTS MADE THEREOF**

(71) Applicant: EMPA Eidgenössische Materialprüfungs- und Forschungsanstalt, 8600 Dübendorf (CH); ETH Zürich, 8092 Zürich (CH)
(72) Inventor: DANNER, Patrick Marcel, 8600 Dübendorf (CH); OPRIS, Dorina Maria, 8032 Zürich (CH); PLEIJ, Tazio, 8006 Zürich (CH); BAYLES, Alexandra Victoria, Newark, 19702 (US); VERMANT, Jan, 8006 Zürich (CH)
(74) Representative: Troesch Scheidegger Werner AG

(57) **Abstract**

The present invention pertains to a shear thinning two-phase composition based on polysiloxanes and a filler. The invention is further directed to associated methods of manufacturing the composition, to the use of the composition as an ink and to products made from the composition.

## Description

The present invention pertains to a shear thinning two-phase composition based on polysiloxanes and a filler. The invention is further directed to associated methods of manufacturing the composition, to the use of the composition as an ink and to products made from the composition.

Capillary suspensions are three-component emulsions that consist of two immiscible liquid phases and a filler (E. Koos, N. Willenbacher, Science 2011, 331, 897-900). Strong shifts in rheological behavior can be achieved by adding an immiscible liquid with an increase of up to two orders of magnitude of the yield-stress & viscosity. This system is versatile and has been used with various fillers, a wide range of organic solvents, and water. Capillary suspensions are currently limited to being used to create porous structures, as at least one of the fluids is removed from the material after processing. There are few examples where capillary suspensions have been demonstrated to modify the rheology of polysiloxanes (S. Roh et al. Adv. Mater. Technol. 2019, 4, 1800528; S. Roh et al., Adv. Mater. 2017, 29, 1701554). In these examples, immiscibility was achieved by adding water to PDMS in the presence of a filler. The material was crosslinked after 3D printing with direct ink writing, and the water was subsequently removed from the material, creating a highly porous PDMS foam. However, many applications require a continuous solid and non-porous structure, such as dielectric elastomer actuators. Hence, the current solution to use water as a secondary phase is not feasible for non-porous applications. Additionally, in all examples, still rather large amount of fillers (>10 vol.%) are required to create a direct writable ink with enough yield-stress and high enough storage modulus to be 3D printable. There are a few commercial and non-commercial thixotropic additives for changing the rheological behavior of PDMS. Most of them use PDMS-PEO block copolymers with various geometries (J. Suriboot et al., Soft Matter 2021, 17, 4133-4142).

It is the object of the present invention to provide improved shear thinning two-phase compositions and associated methods.

This objective is achieved by a composition according to claim 1.

In a first aspect, the present invention is directed to a shear thinning, optionally thixotropic and/or dielectric, two-phase composition comprising or consisting of
(i) a first phase comprising or consisting of a liquid polysiloxane comprising D-type siloxane moieties, optionally PDMS, and optionally further comprising or consisting of Q, T and/or M-type siloxane moieties,
(ii) a second phase comprising or consisting of a liquid polar polysiloxane, optionally a polar cyclic polysiloxane, comprising or consisting of M-, D- and/or T-type polar siloxane moieties, optionally wherein the second phase has a relative permittivity of at least 7 at 10 kHz AC, optionally 10 at 10 kHz AC, optionally 14 at 10 kHz AV, and
(iii) a filler.

Also disclosed is a two-phase composition comprising or consisting of
(i) a first phase comprising or consisting of a liquid polysiloxane comprising D-type siloxane moieties, optionally PDMS, and optionally further comprising or consisting of Q, T and/or M-type siloxane moieties,
(ii) a second phase comprising or consisting of a liquid polar polysiloxane, optionally a polar cyclic polysiloxane, comprising or consisting of M-, D- and/or T-type polar siloxane moieties, optionally wherein the second phase has a relative permittivity of at least 7 at 10 kHz AC, optionally 10 at 10 kHz AC, optionally 14 at 10 kHz AV, and
(iii) a filler.

It was surprisingly found that the composition described herein elicits strong and favorable shifts in the rheological properties of the composition and, *inter alia,* features a high yield-stress, a high storage modulus (e.g. 1 kPa or higher) and a strong pseudoplastic behavior. In contrast to prior art capillary suspensions of polysiloxanes (e.g. PDMS) and water that resulted in porous structures, the polar polysiloxane remains within the final product and can also, e.g., participate in a crosslinking reaction leading to non-porous structures.

For example, and as detailed below, the present composition can be used as an ink, e.g. for direct printing. The composition may be cured (i.e. crosslinked), e.g. with additional crosslinking agents and optionally catalysts, to form, e.g., an elastomer, for example after printing. The properties of the formed (e.g. printed) and crosslinked composition were found to have a low Young's modulus (e.g. Y_{10%} of less than 3 MPa), a low mechanical loss (e.g. tan(δ) of 0.12 or less at 1 Hz) and a high relative permittivity (e.g. of at least 3.4 at 100 Hz AC).

Any number or range given as, e.g., "at least 10" includes the number (e.g. 10) and any higher number.

The term "relative permittivity", as used herein, is commonly understood in the art and refers to the permittivity of a material expressed as a ratio with the electric permittivity of a vacuum (ε₀ = 8.8541878128×10⁻¹² F·m⁻¹).

The term "crosslinked" or "cured" as used interchangeably herein, means that the composition is crosslinked to the extent that it has elastomeric properties/is an elastomer. The degree of crosslinking and/or the amount of crosslinkers needed for achieving elastomeric properties depends on the specific composition, e.g. on the type of polysiloxanes used in the first and/or second phase, and can be routinely determined by the skilled person. Depending on the choice of polysiloxanes, no additional crosslinker is needed to achieve crosslinking by curing (e.g. with a catalyst, an initiator, by application of heat or under UV or visible light radiation). Any degree of crosslinking is encompassed in the term "crosslinked" as long as the crosslinked composition is an elastomer/has elastomeric properties. Moreover, the shear thinning and optionally thixotropic composition may also comprise some crosslinking, however, only to the extent that it is still shear thinning and optionally thixotropic, and not an elastomer, which can again be routinely determined by the skilled person. Therefore, the shear thinning and optionally thixotropic composition as defined herein is essentially not crosslinked (or "non-crosslinked"), wherein "essentially not crosslinked" means that the shear thinning and optionally thixotropic composition may comprise some crosslinking, however, only to the extent that it is still shear thinning and optionally thixotropic, and not an elastomer. For example, an elastomer as used herein, typically possesses a Young's Modulus, strain at break and a storage modulus G' consistently exceeding the loss modulus G" and possess no cross-over of G' and G" independent of the frequency or amplitude at which the material is measured (at room-temperature). In contrast the shear thinning composition, the "non-crosslinked" material, possess essentially no measurable Young's modulus or strain at break and G' does not consistently exceed G" and typically possesses a cross-over point of G' and G" of at least 1 Pa or higher.

It is understood by the skilled person, based on common general knowledge, that the composition disclosed herein is shear thinning and optionally thixotropic before or in the absence of crosslinking to an elastomer has occurred. The shear thinning and optionally thixotropic composition may, for example, already comprise a crosslinker and optionally a catalyst or an initiator for crosslinking, however, the composition is only shear thinning, optionally thixotropic, before the crosslinking to the elastomeric form of the composition has occurred. After crosslinking the composition to an elastomer, the composition is no longer shear thinning or thixotropic, and is herein termed "crosslinked".

The term "liquid" as used herein encompasses polysiloxane liquids with a viscosity of 0.65 cSt to 20,000,000 cSt. It is clear to the skilled person that the liquid polysiloxanes of the composition are no longer liquid after crosslinking (e.g. G' exceeds G" independent of the frequency and amplitude at room temperature). Hence, the crosslinked composition disclosed herein or the crosslinked product comprises the polysiloxanes defined herein which are no longer liquid due to crosslinking.

In the context of the present invention, the composition is a two-phase composition comprising the first phase and the second phase. In other words, the composition is a suspension, wherein the two phases (i.e. the first and second phase) are immiscible and not dissolved in one another. For example, less than 5 vol.% of the first phase dissolves in the second phase or vice versa - e.g. after stirring for 24 hours at 100 °C. An alternative exemplary definition for the presence of two phases according to the present invention is the presence of a difference in relative permittivity between the liquid polysiloxane of the first and second phase of, e.g., at least Δεᵣ = 3.5, optionally at least Δεᵣ = 6.5, optionally at least Δεᵣ = 10.5 at 10 kHz AC. It is clear to the skilled person that certain fillers will or will not be dissolved in the composition, however, the term "two-phase" relates to the presence of the first and second phase as defined herein which are not dissolved in one another and are immiscible.

In an embodiment, the composition of the present invention is essentially solvent-free, e.g. free of organic solvents or water. In other words, in this embodiment, there is no solvent present, or not present to the extent that the two-phase nature of the composition would be changed to a solution comprising the first and second phase.

Any liquid polysiloxane comprising D-type siloxane moieties can be used as a first phase and any liquid polar polysiloxane comprising M-, D- and/or T-type moieties can be used as a second phase as long as these phases are immiscible. In other words, the polarity of the second phase is relative to the first phase.

The immiscibility of the phases is based on the difference in polarity of the polysiloxanes, wherein the polysiloxane of the second phase, i.e. the combination of the siloxane moieties making up this polysiloxane, is more polar than the polysiloxane of the first phase (i.e. the combination of siloxane moieties making up this polysiloxane). The skilled person understands that the immiscibility refers to the essentially non-crosslinked form of the composition, at least if crosslinking is induced or occurs between the polysiloxanes of the first and second phase.

In an exemplary, non-limiting embodiment, the term "polar polysiloxane" means that the siloxane moieties of the polar polysiloxane comprise at least one organic substituent at the silicon atom that is or comprises a group with a dipole moment of, e.g., 0.5 or greater. As noted above, the first and second phase differ in the polarity of the polysiloxanes and any degree of polarity or difference in polarity is suitable as long as (a) the polysiloxane of the second phase is (more) polar compared to the polysiloxane of the first phase and (b) the first and second phase are immiscible.

Exemplary groups suitable as substituents at the silicon atom of the polar polysiloxane include, e.g., those given for R⁴ further below.

In an embodiment, the liquid polysiloxane of the first phase has a relative permittivity of less than 7 at 10 kHz AC, optionally about 2.7 to about 3 at 10 kHz AC and/or the liquid polar polysiloxane of the second phase has a relative permittivity of at least 7 at 10 kHz AC.

The two-phase composition disclosed herein, in its shear thinning and/or crosslinked form, is optionally dielectric. The composition, in its shear thinning and/or crosslinked form, is optionally dielectric if the filler (and any further components) in the composition is not electrically conductive. Exemplary fillers for use in the dielectric composition include, e.g.: crosslinked dielectric polymer particles, silica, ceramic, boron nitride, titanium oxide, aluminum oxide, barium titanate, ZnO, and a mixture thereof.

The terminology of Q-, T-, D- and M-type siloxane moieties is commonly understood in the art to refer to the connectivity of the siloxane moieties and the number of organic residues on the silicon atom of the siloxane moieties. A Q-type siloxane moiety has no organic residues attached to the silicon atom and four oxygen atoms attached to the silicon atom. AT-type siloxane moiety has one organic residue attached to the silicon atom and three oxygen atoms attached to the silicon atom. A D-type siloxane moiety has two organic residues attached to the silicon atom and two oxygen atoms attached to the silicon atom. A M-type siloxane moiety has three organic residues attached to the silicon atom and one oxygen atom attached to the silicon atom. The organic residues attached to the silicon atom can, for example, be selected from R¹ and R² for the polysiloxanes of the first phase, and/or from R³ and R⁴ for the polysiloxanes of the second phase.

The oxygen atoms attached to the Q, T-, D- and M-type siloxane moieties can, e.g. via a condensation reaction, be connected to the silicon atom of other siloxane moieties or be attached to an organic residue, e.g. methyl, ethyl, propyl, or butyl.

Linear, branched and cyclic liquid (polar) polysiloxanes are encompassed by the term "liquid (polar) polysiloxane" as used herein.

The filler for use in the present composition can be any filler known in the art, it can be a polar or non-polar filler, it may, e.g., stabilize the two interphases, as known in the art (see, e.g., E. Koos, N. Willenbacher, Science 2011, 331, 897-900). Besides stabilizing the capillary suspension in the non-crosslinked state, the filler can add additional functionality into the final product, e.g., by rendering the composition conductive, through addition of conductive particles, further increase the relative permittivity of the suspension through ceramic particles, turn the composition magnetic through magnetic particles and/or change the mechanical properties of the crosslinked elastomer.

In an embodiment of the composition according to the invention, which may be combined with any of the embodiments of the composition still to be addressed unless in contradiction, the composition of the present invention is one, wherein the liquid polysiloxane of the first phase (i) comprises or consists of siloxane moieties according to formula D 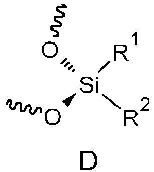 wherein 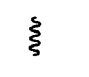
indicates a covalent siloxane bond to a silicon atom of another siloxane moiety, and
R¹ and R² are independently selected from the group consisting of hydrogen, methyl, ethyl, propyl, butyl, hexyl, heptyl, phenyl, cyclohexyl, vinyl, allyl, and cyclopentadienyl

The liquid polysiloxane of the first phase (i) may comprise different siloxane moieties according to formula D which differ in the nature of the R¹ and/or R² residues.

In an embodiment of the composition according to the invention, which may be combined with any of the embodiments of the composition preaddressed or still to be addressed unless in contradiction, the composition of the present invention is one, wherein the liquid polar polysiloxane of the second phase (ii) comprises of siloxane moieties according to formula A 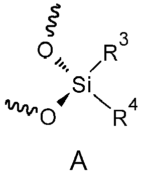 wherein 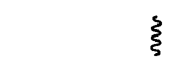
indicates a covalent siloxane bond to a silicon atom of another siloxane moiety,
R³ is selected from the group consisting of methyl, ethyl, propyl, butyl, hexyl, heptyl, phenyl, cyclohexyl, vinyl, allyl, cyclopentadienyl and R⁴, and
R⁴ is -[CₙH₂ₙ-S]ₓ-CₘH₂ₘ-Y, wherein
**x** is 0 or 1; **n** is 2 or 3; **m** is an integer from 0 to 4, and
**Y** is selected from the group consisting of 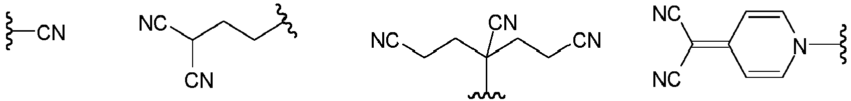 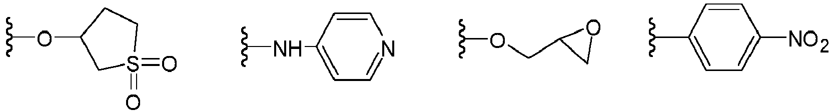 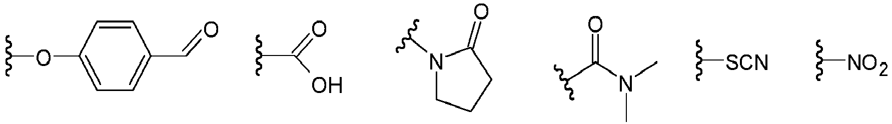 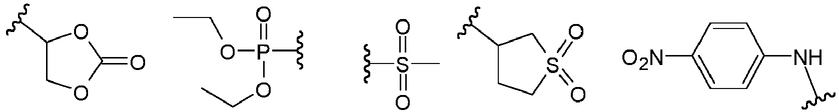 and 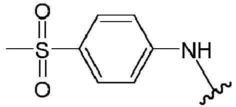
and optionally wherein the liquid polar polysiloxane of the second phase (ii) further comprises siloxane moieties according to formula D as defined herein, optionally with the proviso that at least 20, 30 or 40 mol% of the siloxane moieties in the polysiloxane are according to formula A, and/or optionally wherein the liquid polar polysiloxane of the second phase has a relative permittivity of at least 7 at 10 kHz AC.

The liquid polysiloxane of the second phase (ii) may comprise different siloxane moieties according to formula A which differ in the nature of the R³ and/or R⁴ residues.

The liquid polar polysiloxane of the second phase for use in the present invention comprises polar siloxane moieties as defined herein. Additionally, the polar polysiloxane may comprise non-polar siloxane moieties, e.g. as defined for the polysiloxane of the first phase, to the extent that the polar polysiloxane is still immiscible with the polysiloxane of the first phase. Optionally, the polar polysiloxane may comprise non-polar siloxane moieties, e.g. as defined for the polysiloxane of the first phase, to the extent that the relative permittivity of the composition, optionally after forming a crosslinked or non-crosslinked product, is at least 3.4 or at least 6 at 100 Hz AC.

In an embodiment which may be combined with any of the embodiments of the composition preaddressed or still to be addressed unless in contradiction, the liquid polar polysiloxane of the second phase for use in the present invention comprises siloxane moieties according to formula A, wherein R³ is selected from the group consisting of methyl, ethyl, propyl, butyl, hexyl, heptyl, phenyl, cyclohexyl, vinyl, allyl, and cyclopentadienyl.

When R⁴ is -[CₙH₂ₙ-S]ₓ-CₘH₂ₘ-Y, wherein **x** is 0 or 1; **n** is 2 or 3; **m** is an integer from 0 to 4, the formula for R⁴ is to be understood to lead to a stable compound, wherein the atoms' normal valences are not exceeded, and the compound can be isolated and characterized using conventional means. The same applies, mutatis mutandis, to the filler according to the following formula: LiN(CₓF₂ₓ₊₁SO₂)(C_{y}F_{2y+1}SO₂), wherein x and y independently are an integer from 1 to 20.

In an embodiment which may be combined with any of the embodiments of the composition preaddressed or still to be addressed unless in contradiction, the liquid polar polysiloxane of the second phase consists of siloxane moieties, and/or does not comprise any other moieties than siloxane moieties in the polymer chain, optionally does not comprise any polyethers, optionally polyethylene oxides and/or polypropylene oxides.

The liquid polar polysiloxane of the second phase is immiscible with the liquid polysiloxane of the first phase. While certain siloxane moieties comprising, e.g. halogenated, organic residues at the silicon atom could be considered polar siloxane moieties, these siloxane moieties are only encompassed for use in the present invention to the extent that the corresponding polar polysiloxane is not miscible with the polysiloxane of the first phase. For example, the polar siloxane moieties of the polar polysiloxane can be free of halogens or halogenated organic residues in certain embodiments to further ensure immiscibility with the polysiloxane of the first phase and/or a sufficiently high relative permittivity (e.g. of above 7, 10 or 14 at 10 kHz AC).

In an embodiment of the composition according to the invention, which may be combined with any of the embodiments of the composition preaddressed or still to be addressed unless in contradiction, the composition of the present invention is one, wherein
(i) the liquid polysiloxane of the first phase (i) is selected from the group consisting of PDMS, polymethylvinylsiloxane, polymethylphenylsiloxane, polydiphenylsiloxane, polydiethylsiloxane, poly(epoxycyclohexylethylmethyl)siloxane, and co-polymers and mixtures thereof, and/or
(ii) the liquid polar polysiloxane of the second phase (ii) is selected from the group consisting of poly(3,3-trifluoropropylmethylsiloxane), 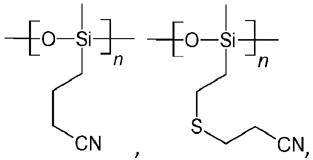 wherein n is an integer from 4 to 2000, optionally 4 to 200, optionally 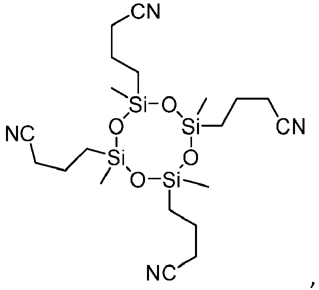 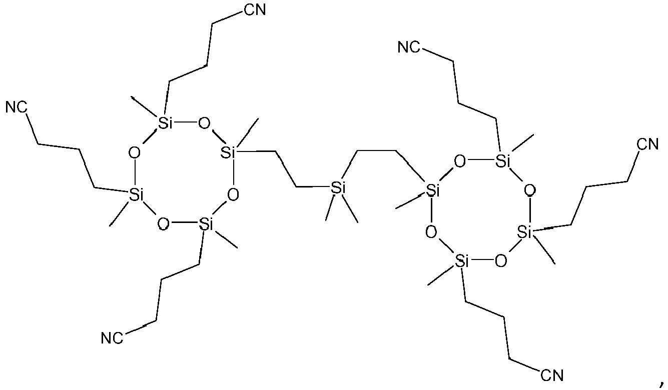 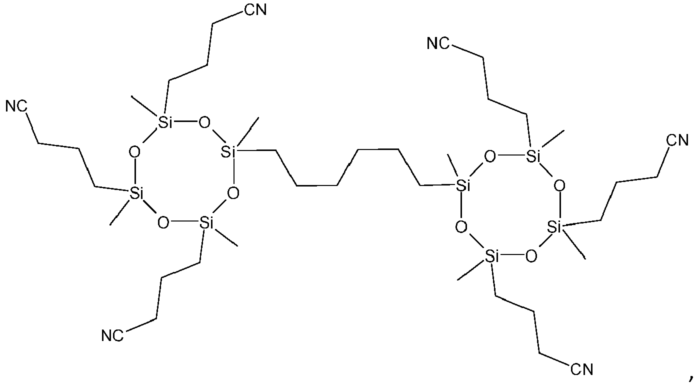 and

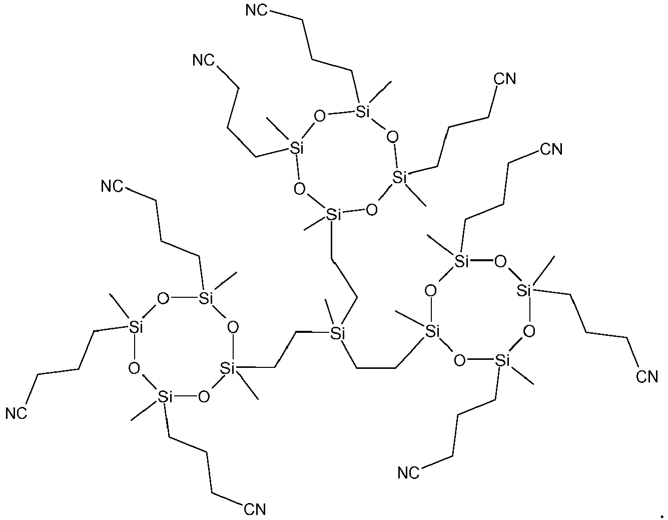

As noted above, the polysiloxanes for use in the present invention, e.g. 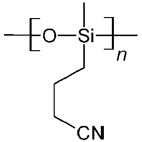 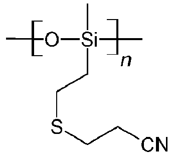 can be in linear, branched or cyclic form.

In an embodiment of the composition according to the invention, which may be combined with any of the embodiments of the composition preaddressed or still to be addressed unless in contradiction, the composition of the present invention further comprises
(iv) a crosslinker for crosslinking the polysiloxane of the first and/or the second phase, optionally selected from the group consisting of polar or non-polar siloxanes containing hydrogen, vinyl, allyl, alkylthiol, amino alkyl, carboxy alkyl, or epoxy alkyl groups, optionally tetreaethoxysilane (TEOS), tetramethoxysilane (TMOS), triethoxysilane, triethoxymethylsilane, trimethoxysilane, trimethoxymethylsilane, 3-(cyanopropyl)triethoxysilane, 3-(cyanopropyl)trimethoxysilane, 3-(chloropropyl)triethoxysilane, 3-(chloropropyl)trimethoxysilane, and
(v) optionally a catalyst for crosslinking, optionally selected from the group consisting of dibutyltindilaureate (DBTL), platinum catalyst, Karsteadt's catalyst, Speier's catalyst, tetramethylammoniumhydroxide (TMAH), tetrbutylphosphonium hydroxide (TBPH), triphenylphosphin, and thermally and UV induced radical initiators.

The crosslinker for use in the present invention may be miscible (i.e. soluble) with the first and/or second phase and it may be suitable for crosslinking either the first phase, the second phase, both and/or both with each other. The terms "polar" and "non-polar" are to be understood as detailed above in the context of the polysiloxanes of the first and second phase. Any crosslinker is encompassed for use in the present invention that is suitable for crosslinking the polysiloxanes disclosed herein and such crosslinkers are known in the art. The skilled person can routinely determine whether a given compound is a crosslinker, e.g. according to an example involving tetraethoxysilane, where a condensation reaction with silanol groups leads to a network structure with a Q type crosslinking under ethanol formation, wherein the skilled person can determine whether an elastomer is formed after addition and activation (e.g. by addition of a catalyst, application of heat and/or visible light or UV irradiation) of the crosslinker.

The catalyst for use in the present composition can be any catalyst that is suitable for inducing and/or accelerating crosslinking. Such catalysts are known in the art and can be routinely selected by the skilled person. In addition or as an alternative to the catalyst, an inducer can be used which induced crosslinking, for example, visible light photoinitiators, a nitro-carbazole based oxime ester, a polymerizable oxime ester, metal hybrid nanoparticles or other photoinitiators known in the art.

The hydrogen, vinyl, allyl, alkylthiol, amino alkyl, carboxy alkyl, or epoxy alkyl groups of the polar or non-polar siloxanes are attached to the silicon atom of the siloxanes.

In an embodiment of the composition according to the invention, which may be combined with any of the embodiments of the composition preaddressed or still to be addressed unless in contradiction, the composition of the present invention is one, wherein the polysiloxane of the first phase (i), optionally PDMS, has a molecular weight of 296 g/mol to 300000 g/mol, optionally 2 to 3.5 kg/mol, and/or an average of 4 to 5000 repeat units per chain, optionally 27 to 47 repeat units per chain.

In an embodiment of the composition according to the invention, which may be combined with any of the embodiments of the composition preaddressed or still to be addressed unless in contradiction, the composition of the present invention is one, wherein the filler is selected from the group consisting of dielectric, polymeric, silica, ceramic, boron nitride, copper, titanium oxide, aluminum oxide, barium titanate, ZnO, carbon, graphene, conductive, magnetic, and Li salts, optionally LiPF₆, LiBF₄, LiSbF₆, LiAsF₆, LiClO₄, LiCF₃SO₃. Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y independently are an integer from 1 to 20, LiCl, Lil, and a mixture thereof.

In an embodiment of the composition according to the invention, which may be combined with any of the embodiments of the composition preaddressed or still to be addressed unless in contradiction, the composition of the present invention is one, wherein the composition comprises
(a) 1 to 99 vol%, optionally 1 to 50 vol%, of the polar polysiloxane of the second phase (ii) or 99 to 1 vol% of the polysiloxane of the first phase, optionally 99 to 50 vol%,
(b) a ratio of polysiloxane of the first phase to polar polysiloxane of the second phase (polar) between 99:1 to 1:99, optionally 99:1 to 1:1,
(c) 1 to 50 vol%, optionally 5 to 25 vol%, optionally 1 to 20 vol% or 1 to 10 vol% of the filler,
(d) 0.1 to 10 wt%, optionally 1 to 5 wt% of the optional crosslinker, and/or
(e) 0.01 to 5 wt%, optionally 0.1 to 2 wt% of the optional catalyst.

In an embodiment of the composition according to the invention, which may be combined with any of the embodiments of the composition preaddressed or still to be addressed unless in contradiction, the composition of the present invention is one, wherein the composition has at least one of:
(a) a yield-stress of at least 1 Pa, optionally 190 Pa or 400 Pa or higher,
(b) a storage modulus of at least 1 kPa, optionally 10 kPa, 30 kPa, 70 kPa or higher, and/or
(c) a degree of pseudo plasticity (Ostwald-de Waele model *η* = *Kγ̇*^{*n*-1}) *n* of 0.21 or lower, optionally of 0.17, 0.15, 0.08 or lower.

The yield-stress as defined herein refers to the cross-over of G'/G" and the storage modulus refers to G'. The properties for yield-stress, storage modulus and degree of pseudo plasticity of the composition apply to the non-crosslinked form of the composition, i.e. in the absence of crosslinking to the extent that the composition would become an elastomer. As noted above, the composition having these properties may, optionally, already comprise a crosslinker and optionally a catalyst but is not crosslinked to the extent that it becomes an elastomer. Optionally, the properties are achieved at a number of crosslinking sites per g of total polymer of less than 0.125 µmol/g to 74.55 µmol/g, optionally less than 1.25 µmol/g to 17.5 µmol/g.

In another aspect which may be combined with any of the embodiments or aspects preaddressed or still to be addressed unless in contradiction, the present invention is directed to a composition as defined herein, wherein the composition is crosslinked, optionally with a number of crosslinking sites per g of total polymer of 0.125 µmol/g to 74.55 µmol/g, optionally 1.25 µmol/g to 17.5 µmol/g.

The definitions for "crosslinked" are provided above and the crosslinked composition is no longer shear thinning or thixotropic but an elastomer and optionally has a number of crosslinking sites per g of total polymer of 0.125 µmol/g to 74.55 µmol/g, optionally 1.25 µmo!/g to 17.5 µmol/g. In other words, the crosslinked composition as defined herein is a composition comprising the components defined for the shear thinning, optionally thixotropic, composition that is no longer shear thinning or thixotropic but is crosslinked, e.g. to an elastomer as defined above.

The term "g of total polymer", as used herein, refers to the sum of the weight of polar polysiloxane(s) of the second phase plus weight of the polysiloxane(s) of the first phase plus weight of the crosslinker(s), without the filler or any other components.

The number of crosslinking sites per g of total polymer of 0.125 µmol/g to 74.55 µmol/g, optionally 1.25 µmol/g to 17.5 µmol/g, can, e.g. correspond to an amount of crosslinker of 0.1 vol% to 20 vol%, optionally 1 vol% to 10 vol%, crosslinker in the composition.

In one embodiment of the composition according to the invention, which may be combined with any of the preaddressed embodiment of th

A further objective is achieved by a method according to claim 11.

In another aspect which may be combined with any of the embodiments or aspects preaddressed or still to be addressed unless in contradiction, the present invention is directed to a method for the manufacture of a product, wherein the method comprises the following steps:
(I) Providing a shear thinning, optionally thixotropic, composition as disclosed herein,
(II) Mixing the composition of step (I),
(III) Forming a product with the composition, optionally by casting or printing, optionally through a tubing or nozzle, and
(IV) Optionally crosslinking the composition, optionally under heating, optionally at 30 to 150 °C, and/or under UV irradiation, optionally to a number of crosslinking sites per g of total polymer of 0.125 µmol/g to 74.55 µmo!/g, optionally 1.25 µmo!/g to 17.5 µmol/g.

In steps (I) to (III) of the present method, the composition is shear thinning, optionally thixotropic, i.e. it is essentially not crosslinked as explained above, optionally has a number of crosslinking sites per g of total polymer of less than 0.125 µmol/g to 74.55 µmol/g, optionally less than 1.25 µmol/g to 17.5 µmo!/g.

The steps of the methods described herein are optionally performed in the order noted, i.e. optionally (I) followed by (II), (II) followed by (III), (III) followed by (IV), etc., optionally including the order of sub-steps as described below.

For example, in step (I) only part of the shear thinning composition (e.g. the first phase and a filler or the first phase and a crosslinker) may be provided before a mixing step (II) is carried out. Subsequently further or the remaining parts of the composition may, for example, be added (e.g. the second phase to the mixture of the first phase, filler and optionally crosslinker) and a mixing step (II) is carried out. In other words, steps (I) and (II) can be repeated with part(s) of the composition until the complete composition according to the present invention is provided and mixed.

For example, the first phase can be mixed with a crosslinker, e.g., if the crosslinker is soluble in the first phase. If the crosslinker is better soluble in the second phase, then the crosslinker can, e.g., be mixed into and/or with the second phase. Exemplary mixing conditions for the first and/or second phase with the crosslinker include 0.5-2 min, optionally about 1 min, e.g. in a planetary mixer at, e.g., about 3500 rpm. Subsequently, the filler can be added. Exemplary mixing conditions for the first or second phase (optionally including the crosslinker) with the filler include mixing for, e.g., 1-5 min, optionally about 5 min, at, e.g., about 3500 rpm. Subsequently, the first or second phase can be added and it can be mixed, e.g. for 1 to 5 min, optionally for about 5 min, e.g. at about 3500 rpm with the composition. Thereafter, the catalyst can be added and mixed for, e.g., 0.5 to 2min, optionally for about 1 min, at e.g. about 3500 rpm. For example, the catalyst can be added last, as the heat produced in the previous mixing steps could start the crosslinking if it is added before, which could lead to an elastomer before the composition is formed into a product. Optionally, the composition can be three-roll-milled after all mixing steps are complete to further improve homogeneity.

All mixing steps can be carried out using a planetary mixer, a high-speed mixer, a high shear mixer, a horizontal mixer, a spiral mixer or a vortex mixer.

In optional step (IV), heating can be done between, e.g., 30 to 150 °C, optionally about 80°C, for crosslinking. The higher the temperature in step (IV), the faster the crosslinking. As noted above, in an embodiment, the crosslinking substantially does not occur before the composition is formed, e.g. printed, into a product. For example, the composition can remain essentially non-crosslinked and can be processed for about 5 days at room-temperature. For example, some crosslinking can be initiated when adding the catalyst, however, the composition may remain essentially non-crosslinked (i.e. not elastomeric) for a given time which can be shortened, e.g. by heating or applying UV irradiation. The optional step of crosslinking can also be done at room temperature until crosslinking has occurred, e.g. during about 5 to 20 days.

In an embodiment, the method of the present invention comprises the following steps:
(la) Providing a first phase as defined herein,
(laa) Optionally providing a crosslinker as defined herein,
(Ilaa) Optionally mixing the crosslinker and the first phase,
(Ib) Providing a filler as defined herein,
(IIb) Mixing the first phase, optionally comprising the crosslinker, and the filler,
(Ic) Providing a second phase as defined herein,
(IIc) Mixing the second phase and the composition of step (Ilb),
(Id) Optionally providing a catalyst,
(Ild) Mixing the optional catalyst with the composition of step (IIc),
(IIIa) Optionally loading the composition of step (IIc) or (Ild) into a container, optionally a syringe, and centrifuging the container, optionally for about 5 min at about 3000 rpm to remove trapped air,
(IIIb) Forming a product with the composition, optionally by casting or printing, optionally through a tubing or nozzle, and
(IV) Optionally crosslinking the composition, optionally under heating, optionally at 30 to 150 °C, and/or under UV irradiation, optionally to a number of crosslinking sites per g of total polymer of 0.125 µmol/g to 74.55 µmol/g, optionally 1.25 µmo!/g to 17.5 µmol/g,
wherein the mixing in steps (Ilaa) and (Ild) is carried out for 0.5-2 min, optionally about 1 min, e.g. in a planetary mixer at, e.g. about 3500 rpm and the mixing in steps (IIb) and (IIc) is carried out for 1-5 min, optionally about 5 min, at, e.g., about 3500 rpm

As explained above, the composition is shear thinning, optionally thixotropic during steps (Ia) to (IIIb), i.e. there is essentially no crosslinking until step (IV).

In an embodiment of the method according to the invention, which may be combined with any of the embodiments of the method preaddressed or still to be addressed unless in contradiction, the method of the present invention is one, wherein in step (III) the product is formed by an extrusion-based process, optionally by direct ink writing, a co-extrusion process, screen printing, flexographic printing, inkjet printing, 3D printing techniques, gravure printing techniques, slot die coating or blade coating.

In another aspect which may be combined with any of the embodiments or aspects preaddressed or still to be addressed unless in contradiction, the present invention is directed to a product,
(a) formed by crosslinking the composition disclosed herein, optionally according to step (IV) of the method disclosed herein, optionally to a number of crosslinking sites per g of total polymer of 0.125 µmol/g to 74.55 µmol/g, optionally 1.25 µmol/g to 17.5 µmol/g,
(b) obtainable or obtained by the method disclosed herein excluding step (IV), optionally with a number of crosslinking sites per g of total polymer of less than 0.125 µmol/g to 74.55 µmol/g, optionally less than 1.25 µmol/g to 17.5 µmol/g, optionally an ink, a three-dimensional, optionally hollow, product, a grid, an insulator, a capacitor, a battery, a light emitting device, a transistor, or a sensor, or
(c) obtainable or obtained by the method disclosed herein including step (IV), optionally a three-dimensional, optionally hollow, product, a grid, an insulator, a dielectric elastomer transducer, a capacitor, a battery, a light emitting device, a transistor, or a sensor.

For example, the product is preferably crosslinked to an elastomer after it is formed, e.g. by printing.

The product obtained by the method disclosed herein excluding step (IV) is essentially non-crosslinked, i.e. it is not an elastomer. The non-crosslinked material can, for example, be a liquid and/or gel electrolyte, with higher ionic conductivity compared to the crosslinked state. Furthermore, the non-crosslinked material can, for example, be further encapsulated into an elastomeric or plastic matrix and used as a liquid/gel dielectric, magnetic or conductive deformable component, in, e.g., batteries, conductors, actuators or sensors. The non-crosslinked material allows, for example, for deformation at lower forces compared to the crosslinked material.

The crosslinked or non-crosslinked product disclosed herein is optionally dielectric. The product, in its non-crosslinked and/or crosslinked form, is optionally dielectric if the filler (and any further components) in the composition is not electrically conductive. Exemplary fillers for use in the dielectric composition include, e.g.: dielectric, polymeric, silica, ceramic, boron nitride, titanium oxide, aluminum oxide, barium titanate, ZnO.

In an embodiment which may be combined with any of the embodiments of the composition or product preaddressed or still to be addressed unless in contradiction, the composition or product disclosed herein is a non-porous composition or product, optionally a composition or product with a porosity of 10 to 60% or less. Optionally, the non-porous composition or product is a crosslinked composition or product.

In an embodiment, the product is one, wherein the polysiloxane of the first phase has a relative permittivity of about 2.7 to 3 at 10 kHz AC and/or the polar polysiloxane of the second phase has a relative permittivity of at least 7 at 10 kHz AC.

In an embodiment which may be combined with any of the embodiments of the composition or product preaddressed or still to be addressed unless in contradiction, the crosslinked composition of the present invention or the product of the present invention formed by crosslinking of the shear thinning composition or obtained after step (IV) of the method disclosed herein is one, wherein the composition or product has one or more of:
(a) a Young's modulus Y_{10%} of less than 3 MPa, optionally of less than 2 MPa, less than 1 MPa or about or less than 0.1 MPa,
(b) a mechanical loss tan(δ) of 0.12 or less at 1 Hz, optionally 0.1 or less or about or less than 0.055 at 1 Hz, and/or
(c) a relative permittivity of at least 3.4, 6.7 or 11.4 at 100 Hz AC or more

The composition or product, wherein the composition is crosslinked, is formed by crosslinking of the shear thinning composition, or is obtained after step (IV) of the method disclosed herein, optionally refers to a product comprising a crosslinker and optionally a catalyst which is crosslinked/cured to an elastomer.

In another aspect which may be combined with any of the embodiments or aspects preaddressed or still to be addressed unless in contradiction, the present invention is directed to a use of
(a) a composition as disclosed herein as an ink and/or for forming, optionally by casting or printing, a product, optionally a product as disclosed herein, or
(b) a polar polysiloxane as disclosed herein as an additive in a shear thinning, optionally thixotropic and/or dielectric, two-phase ink, optionally in an ink comprising a first phase with a polysiloxane and a filler as defined herein.

The following Figures and Examples serve to illustrate the invention and are not intended to limit the scope of the invention as described in the appended claims.

### Figures

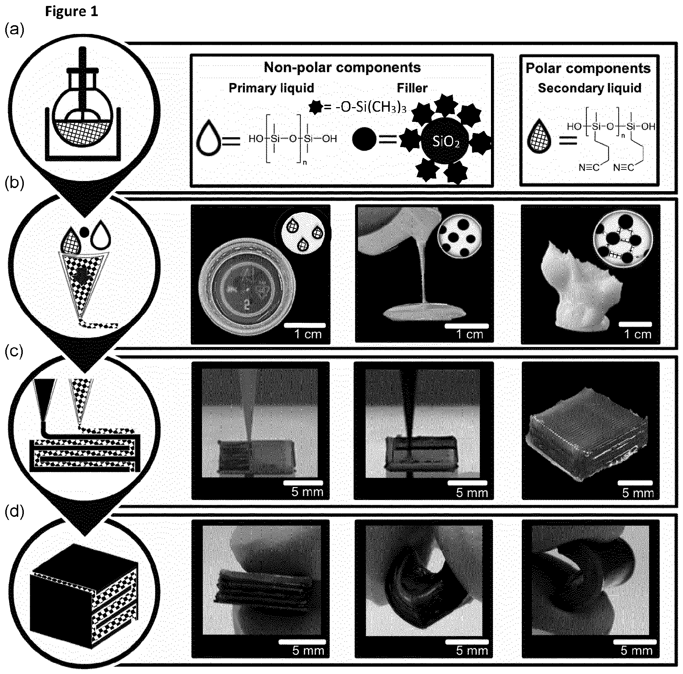

**Figure 1** shows an exemplary overview of two exemplary phases and ink creation through capillary suspensions, the possibility to print the material and a use of the material in multi-material printing to create, e.g., 3D printed high- relative-permittivity stack dielectric elastomer actuators (DEA). a) Synthesis of polar polysiloxane (right) and selection of (non-polar) hydroxyl-terminated PDMS (left) and hydrophobic fumed silica (middle). b) Capillary ink preparation to achieve a direct ink writing (DIW) printable dielectric (from left to right): two immiscible fluids (dotted corresponds to polar polysiloxane, transparent to PDMS) inset depicts droplet formation; flowing and spreading of fluid containing 12.4 vol% fumed silica filler in PDMS, inset shows particles within the fluid, no percolated network; DIW printable ink with 12.4 vol% fumed silica, PDMS and 30 vol% polar polysiloxane, inlet depicts the capillary bridges of the immiscible fluid connecting the particles, creating a stable suspension, c) Multi-material printing of electrode and dielectric to create a stacked DEA (rom left to right) printing of a second layer of the capillary ink dielectric, printing of the interdigitated electrode material upon the dielectric layer, printed 10 layers stack dielectric elastomer actuator, d) 3D printed and crosslinked soft DEA (from left to right) stack slightly squeezed, stack folded on the edges and stack folded on the electrode.

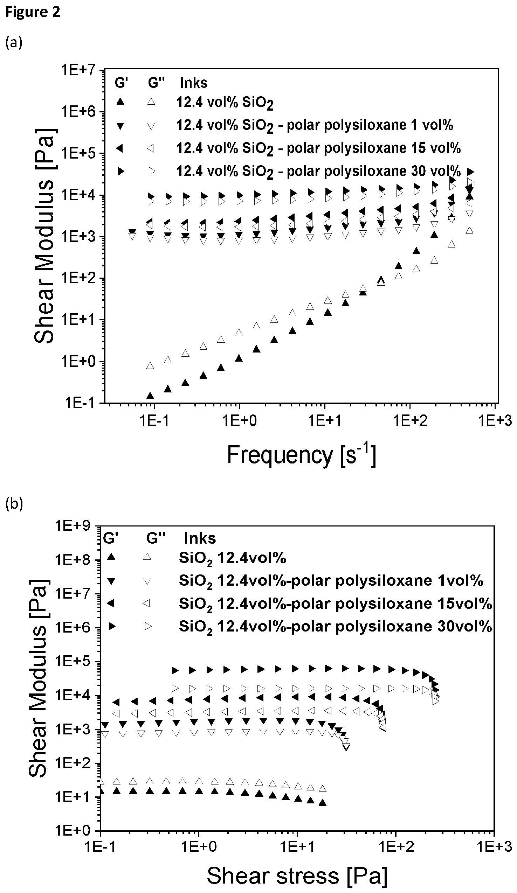

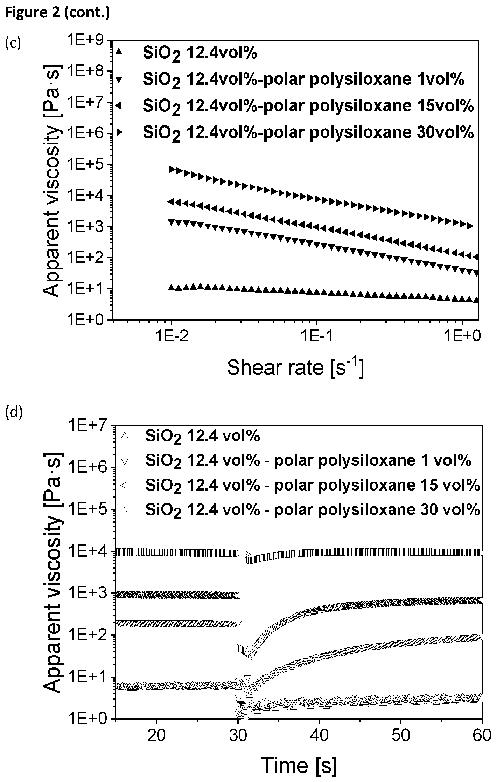

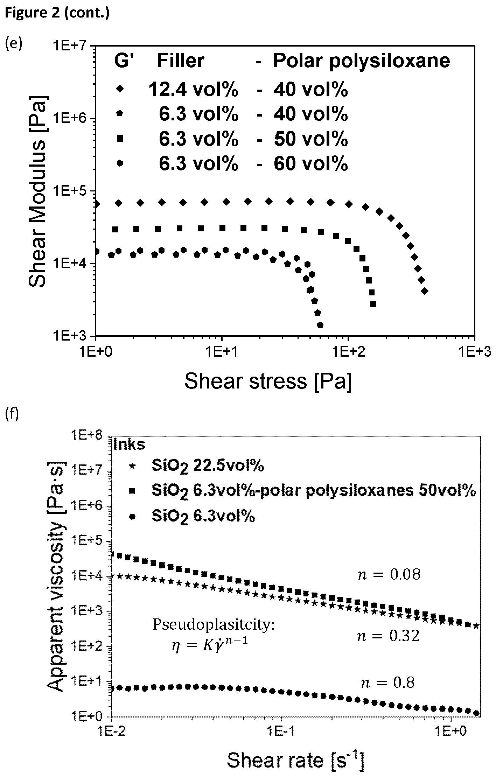

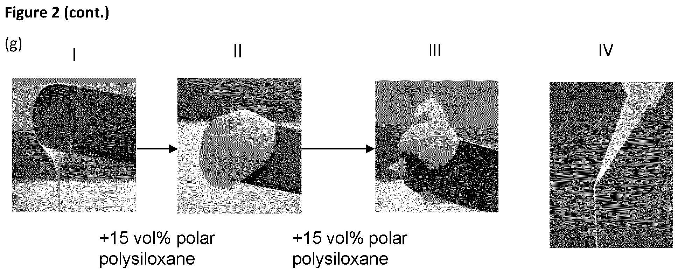

**Figure 2** shows the rheological characterization of the inks at varying filler and polar volume fractions. a) Frequency sweep at 1% amplitude b) Amplitude sweep at 0.1 Hz frequency c) Flow curve d) Three-interval thixotropy test (3-iTT) at intervals of at 0.1 s⁻¹, 100 s⁻¹ and 0.1 s⁻¹. e) Amplitude sweep at 0.1 Hz of varying filler and polar polysiloxane concentration f) Flow curves of ink with no polar polysiloxanes that is printable (22.5 vol% filler) as reference, of ink with no polar polysiloxanes and 6.3 vol% filler as reference, and 6.3 vol% filler with 50 vol% polar polysiloxanes. g) (I): Image of non-polar polysiloxane with 12.4 vol% filler, no polar polysiloxane; (II): Image of 12.4 vol% filler and 15vol% polar polysiloxane; (III): Image of 12.4 vol% filler and 30 vol% polar polysiloxane; (IV) Image of extrusion of 6.3vol% filler and 50vol% polar polysiloxane through a nozzle with 200 µm diameter.

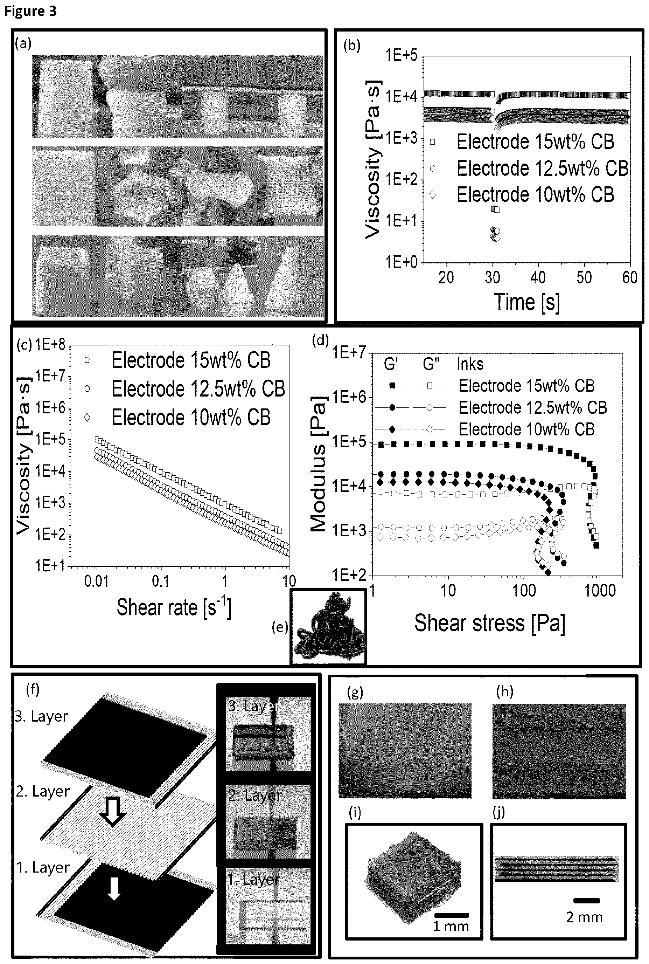

**Figure 3** shows the possibility of printing of capillary inks, creation of electrode material, multi-material printing process and printed layered devices. a) Images of 3D printing of the capillary ink containing 50 vol% polar polysiloxane, 6.3 vol% filler and 5 wt% crosslinker, printed and crosslinked structures and their deformability from top to bottom: hollow cylinder, 20 layer grid, hollow cubes and hollow cones. b) Rheological characterization of the electrode inks three-interval thixotropy test (3-iTT) at intervals of at 0.1 s⁻¹, 100 s⁻¹ and 0.1 s⁻¹. c) Flow curve. d) Amplitude sweep at 0.1 Hz e) Image of extruded ink. f) Printing paths and process for the electrode (grey) and dielectric (yellow) inks with images of the printing process. g) SEM image of a cut surface of a crosslinked dielectric elastomer actuator h) SEM image of two electrodes and one dielectric layer in the middle of the 3D printed dielectric elastomer actuator i) Image of 3d printed stack dielectric elastomer actuator, j) Image of a cut printed interdigitated stack dielectric elastomer actuator made from 10 layers.

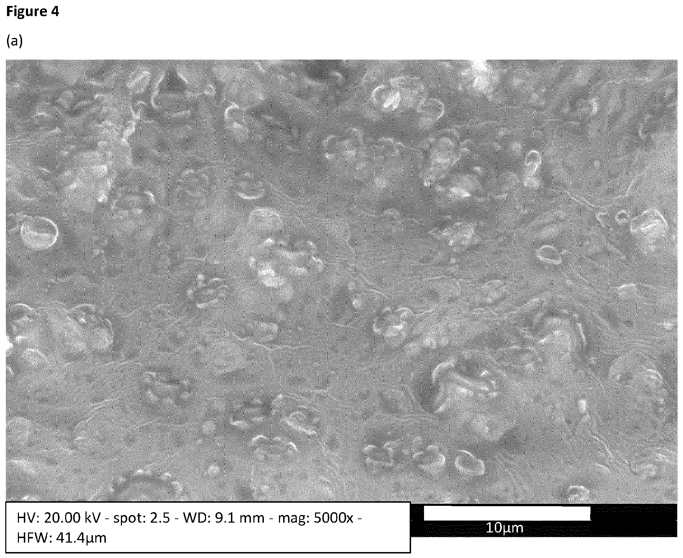

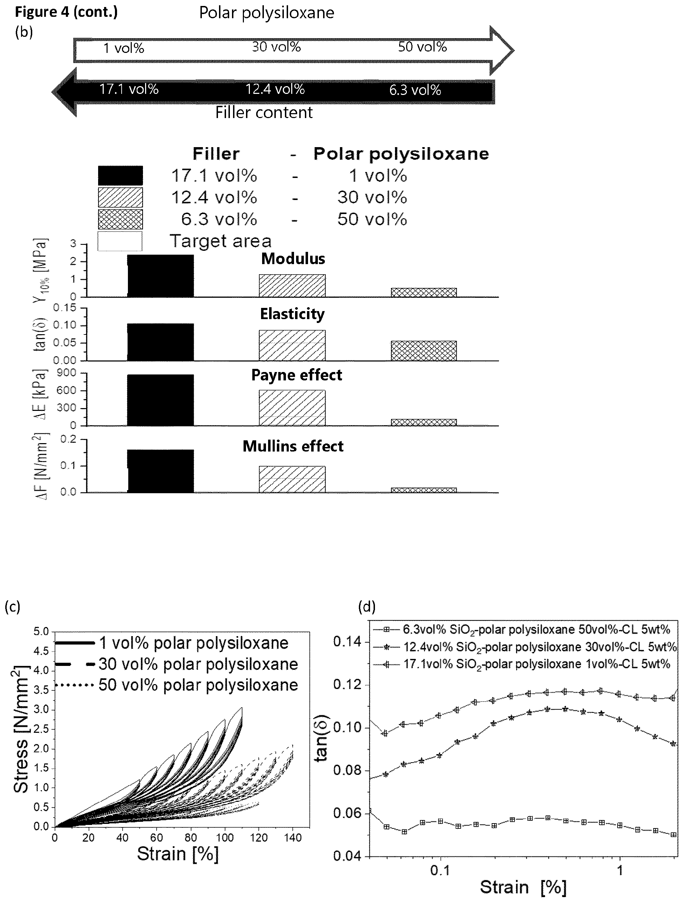

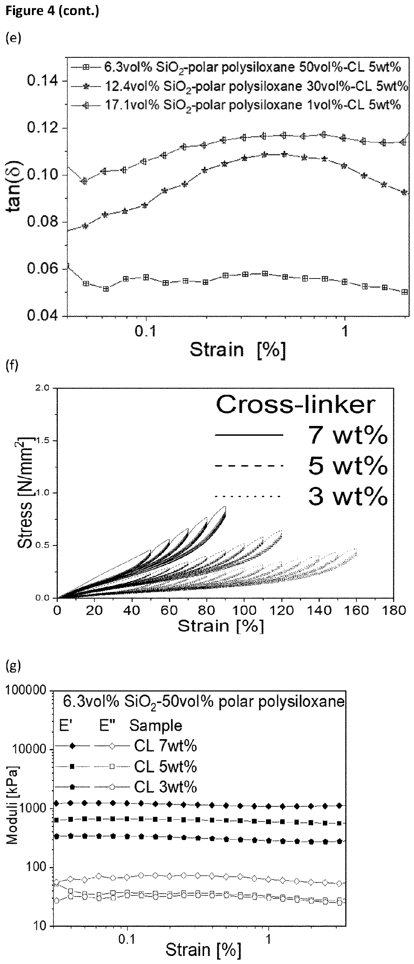

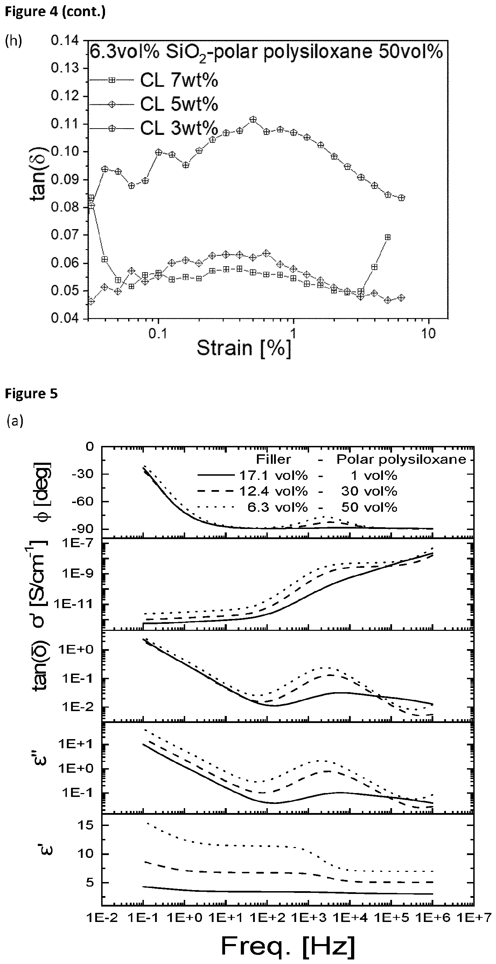

**Figure 4** shows mechanical analysis of crosslinked elastomers with similar DIW printable inks from capillary suspensions but three different filler and polar polysiloxane concentrations. a) SEM images of the crosslinked sample shows no porous structures but a solid material with filler particles and oil rich regions. b) Impact of simultaneously changing filler and polar polysiloxane concentration on mechanical parameters such as modulus, elasticity, Payne & Mullins effect. c) Cyclic stress-strain curves of the filler and polar polysiloxane varied samples. Topmost graph shows 1 vol%, middle graph shows 30 vol% and lowest graph shows 50 vol% polar polysiloxane, d) DMA storage and loss modulus of strain sweep. e) DMA mechanical losses of strain sweep. f) DMA Storage and Loss modulus of frequency sweep. Topmost graph shows 7 wt%, middle graph shows 5 wt% and lowest graph shows 3 wt% crosslinker. g) Cyclic stress-strain curve of elastomers with the lowest filler concentration and varying crosslinker density. h) DMA storage and Loss modulus of amplitude sweep of elastomers with the lowest filler concentration and varying crosslinker density.

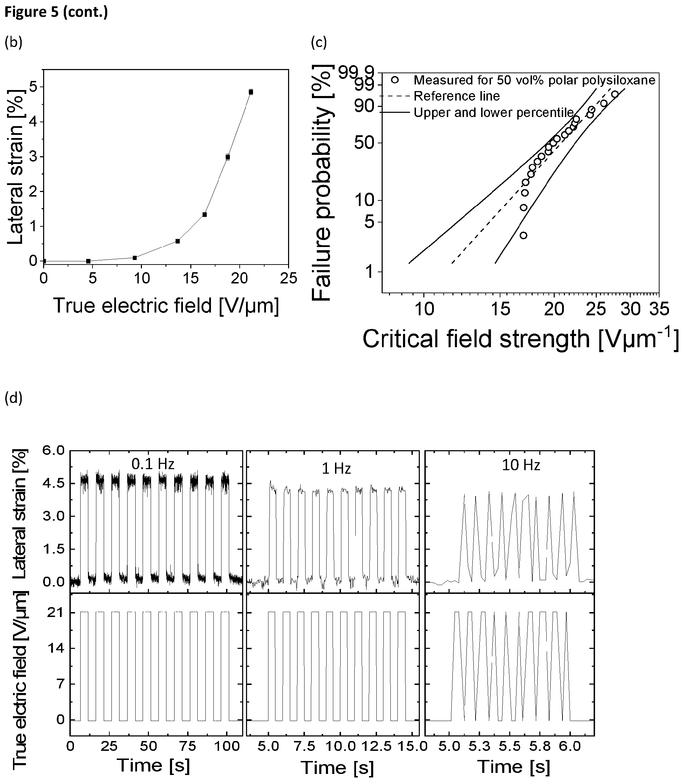

**Figure 5** shows electrical analysis of the crosslinked elastomers. a) Dielectric properties of the composites: relative permittivity, imaginary part of the relative permittivity, loss tangent, ion conductivity and phase angel at an AC field of 1 V from 0.1 Hz to 1 MHz. b) Voltage vs. actuation strain of the printed dielectric. c) Weibull distribution of the dielectric breakdown field, d) Cyclic actuation profile at varying frequencies.

### Examples

### Example 1: Materials

Materials: 3-cyanopropylmethyldichlorsilane, PDMS, hydroxy terminated, 45-85 cSt and (25-35% methylhydrosiloxane)-dimethylsiloxane copolymer, 25 cSt, silicone dioxide, amorphous, hexamtehldisilazane treated and dibutlytin dilaureate (DBTL), poly(3,3-trifluoropropylmethylsiloxane) (viscosity 1000 cSt.), cyanopropylmethylsiloxane (viscosity 800-1000 cSt.), tetramethyltetracyclosiloxane, Karstedt's catalyst, allylcyanide, divinyldimethylsilane, trivinylmethylsilane, were purchased form ABCR. Boron nitride was purchased from Heinze GmbH (Germany). NaHCO₃ was purchased from Sigma-Aldrich. Toluol as well as dichloromethane were purchased from VWR Chemicals. *O*-Xylol was purchased from Merck. Carbon black 100% compressed from acetylene was purchased from Gelest. 1,5-Hexadiene was purchased from Sigma Aldrich All reagents were used without further purification unless otherwise stated.

### Example 2: Synthesis of polysiloxanes

Synthesis of cyclic and linear polycyanopropylmethylsiloxane hydroxyl terminated: 3-cyanopropylmethyldichlorsilane (120 mL, 138.05 g, 0.76 mol, 1 eq.) was added dropwise to a dispersion of NaHCO₃ (223g, 2.65 mol, 3 eq.) in 1 L toluene. After the addition, the mixture was stirred at 110 °C for 12 h while removing water under azeotropic distillation. The reaction was filtered and washed with toluol and dichloromethane. The toluol phase contained the cyclic compounds while the linear polymers where in the dichloromethane phase. The organic phase was washed with water three times and the solvent was removed. After drying at 110 °C under vacuo, a yellowish, viscous liquid is obtained in a yield of 93%.

### Synthesis of the two-ring polar polysiloxanes bridged by a silane:

Tetramethyltetracyclosiloxane (54 mL, 53.5 g, 222.5 mmol) were added to 100 mL o-Xylene in a 500 mL three-neck flask and mixed for 5 min at 300 rpm. The Karstedt's catalyst (0.1 mL) was added to a mixture of divinyldimethylsilane (13.5 mL, 10 g, 89 mmol) in 100 mL *o*-Xylene. The mixture was slowly added with a dripping funnel to the tetramethyltetracyclosiloxane solution. After addition, the reaction was stirred at RT for 24 h. The excess tetramethyltetracyclosiloxane was removed under vacuum and allylcyanide (50.4 mL, 41.8 g, 623 mmol) was added to the reaction mixture together with 0.1 mL Karstedt's catalyst. The mixture was reacted for 4 d at 110 °C under reflux. The solvent was removed and the mixture was dried under vacuum.

### Synthesis of the two-ring polar polysiloxanes bridged by hexane:

Tetramethyltetracyclosiloxane (10.14 mL, 10 g, 41.6 mmol) were added to 100 mL o-Xylene in a 500 mL three-neck flask and mixed for 5 min at 300 rpm. The Karstedt's catalyst (0.1 mL) was added to a mixture of 1,5-Hexadiene (2.5 mL, 1.71 g, 20.79 mmol) in 100 mL *o*-Xylene. The mixture was slowly added with a dripping funnel to the tetramethyltetracyclosiloxane solution. After addition, the reaction was stirred at RT for 24 h. The excess tetramethyltetracyclosiloxane was removed under vacuum and allylcyanide (25.2 mL, 21.6 g, 312 mmol) was added to the reaction mixture together with 0.1 mL Karstedt's catalyst. The mixture was reacted for 4 d at 110 °C under reflux. The solvent was removed and the mixture was dried under vacuum.

Synthesis of the three-ring polar polysiloxanes: Tetramethyltetracyclosiloxane (9 mL, 37g, 37.2 mmol) were added to 100 mL o-Xylene in a 500 mL three-neck flask and mixed for 5 min at 300 rpm. The Karstedt's catalyst (0.05 mL) was added to a mixture of trivinylmethylsilane (1 mL, 6.2 mmol) in 100 mL o-Xylene. The mixture was slowly added with a dripping funnel to the tetramethyltetracyclosiloxane solution. After addition, the reaction was stirred at RT for 24 h. The excess tetramethyltetracyclosiloxane was removed under vacuum and allylcyanide (8.5 mL, 7.06g, 105 mmol) was added to the reaction mixture together with 0.05 mL Karstedt's catalyst. The mixture was reacted for 4 d at 110 °C under reflux. The solvent and excess allylcyanide was removed and the mixture was dried under vacuum.

### Example 3: Ink preparation

Capillary ink preparation: In a typical mixture the commercial PDMS (15 g) was mixed with 0.675 g of (25-35% methylhydrosiloxane)-dimethylsiloxane copolymer with a viscosity of 25-35 cSt for one minute at 3500 rpm in a SpeedMixer. In a next step, surface functionalized hydrophobic silica (5 g) was added and mixed in a SpeedMixer for five minutes at 3500 rpm. A total of 17.45 g of the polar siloxane was added and mixed for another five minutes at 3500 rpm in the SpeedMixer. Lastly, 200 µL of dibutyltin dilaureate (DBTL) was added and for one more minute mixed in the SpeedMixer at 3500 rpm. The ink was loaded into 30 cc syringes and trapped air was removed in a centrifuge at 3000 rpm for 5 min.

Conductive ink: For the conductive ink, carbon black (5.7 g) was added to PDMS (38.4 g) and five minutes SpeedMixed at 3500 rpm. (25-35% methylhydrosiloxane)-dimethylsiloxane copolymer (1.6 g) were added to the ink and mixed for one minute at 3500 rpm. Lastly, 400 µL DBTL were added and mixed in for one more minute at 3500 rpm in the SpeedMixer. The ink was three-roll milled five times and loaded into a 30 cc syringe. The syringe was centrifuged at 3000 rpm for 5 minutes.

### Example 4: Printing

Multi-material Printing: Electrode and dielectric layered devices were manufactured with a Direct Ink Writing printer (3D-Bioplotter "Manufacturer Series," EnvisionTEC, Germany). The ink was pneumatically extruded with pressures ranging between 0.3 and 1 bar, through conical nozzles with inner diameter of 0.2 mm. The print head switched automatically between the two inks after each layer was completed. The filaments were deposited on glass slides at speed ranging between 10 and 25 mm s⁻¹. After printing, the produced parts were cured at RT or optionally at 80 °C and rest for at least two weeks before mechanical or electrical characterization and testing.

### Example 5: Analysis methods

Rheological characterization: The behavior under shear of the various inks were characterized at 25 °C with an MCR 302 Anton Paar rheometer in a plate-plate geometry with 25 mm of diameter and 1 mm of gap. The plate-plate were rough plates to suppress wall-slip. Flow curves were obtained by changing rotational shear rate from 0.001 to 100 s⁻¹ in a sweep test. The oscillatory amplitude and frequency sweep where measured from 0.01 to 1000% at a frequency of 1 Hz and from 0.1 to 500 Hz at 1% strain, respectively. Apparent yield-stress was defined as the cross-over point of storage and loss modulus. DMA measurements was carried out using an RSA 3 analyzer from TA Instruments in tensile mode. The frequency sweep was performed at 2% strain, while the strain sweep was performed at 0.1 Hz.

Tensile measurements: Tensile measurements were performed with a Zwick Z010 tensile test machine with a 50 mm min⁻¹ speed using dog-bone shaped samples of 18 mm length and 2 mm width. The Young's moduli were determined from the linear fit slope of the stress-strain curves from 0 ≤ 10%.

Broadband Dielectric Spectroscopy: Temperature-dependent dielectric properties were evaluated using a Novocontrol Alpha-A Frequency Analyzer equipped with quatro cryosystem temperature control. Dielectric spectra were recorded by applying an external electric field of 10 kV m⁻¹ in a frequency range of 0.1 to 1 MHz at RT.

Dielectric Breakdown Measurement: A 12.5 kV DC high voltage power supply system (HCL 35-12500 pos, F.u.g electronic GmbH, Germany) was used for all measurements. Samples were sandwiched between two metal electrodes with 1 mm² area embedded in an epoxy resin. The applied voltage was linearly increased until failure voltage was recorded on several samples. Statistical analysis was employed to evaluate the dielectric breakdown field, commonly following Weibull probability model.

### Example 6: Polar and non-polar polysiloxane capillary ink

The steps from polymer synthesis and selection over capillary ink formulation, to printing of the capillary ink and final crosslinked elastomer properties in the final actuator and sensor device (dielectric elastomer transducer) are displayed in Figure 1. In this example, the primary liquid is a hydroxyl-terminated polydimethylsiloxane (PDMS) of low viscosity 45-85 cSt (Figure 1a). The PDMS has a low molecular weight of 2-3.5 kg·mol⁻¹, which corresponds to an average of 27-47 repeat units per chain. The low chain length PDMS behaves like a Newtonian-fluid, and cannot be used without modifications for 3D printing techniques such as direct ink writing as no significant degree of shear-thinning, yield-stress and low storage modulus are present. Capillary forces were induced with a second immiscible fluid (Figure 1b). This fluid is a cyanopropyl-modified polysiloxane, which due to its polarity, is immiscible with PDMS. This difference in polarity leads to phase separation of the two polysiloxanes and immiscibility even under heating or strong, prolonged mixing (Figure 1a). It should be noted, that the polar polysiloxane synthesis forms chains as well as cyclic siloxanes, which function as softener in the crosslinked elastomer. At filler loadings of 12.4 vol% fumed silica filler in the short chain PDMS, the composition is a fluid, which flows when pouring and readily spreads on any substrate, as the filler does not create percolating network, and no significant additional intra-molecular forces are present. A capillary network is created by adding the second immiscible liquid to the composition of 12.4 vol% filler and PDMS, which strongly affects the composition's rheological behavior and allows the creation of a viscoelastic ink with a yield stress, without further addition of fillers. To crosslink the printed structure into elastomers, two further non-polar components can be added: a crosslinker and a catalyst. As crosslinker in this example 25-35% methylhydrosiloxane)-dimethylsiloxane copolymer with a low viscosity of 25 cSt) was used. The capillary ink was then printed using direct ink writing (DIW) into diverse structures such as hollow cones, hollow cubes or multilayer grids. In combination with an electrode, multi-material printing allows the simple creation of stack dielectric elastomer transducer (Figure 1c). The crosslinked devices of this example are stretchable, soft and can function as tactile sensor or actuator (Figure 1d).

### Example 7: Rheological behavior of the ink

To understand the impact the creation of capillary bridges has on the material composition, the rheological impact on different volume fraction of the three component (liquid-liquid-solid) system was studied (Figure 2). For instance, adding 1 vol.% polar polysiloxane to a composite of polydimethylsiloxane containing 12.4 vol.% fumed silica creates a yield-stress ink (Figure 2a,b), while the material without the polar polysiloxane behaves predominantly as a liquid with G" larger than G' at the linear viscoelastic regime (LVE). Further addition of polar polysiloxane can increase the storage modulus and even more so the yield-stress, viscosity, and the time-dependent recovery behaviour after shear (Figure 2 a-d). The shifts in rheological behaviour are significant, with a change of up to three orders of magnitude, e.g. the plateau storage modulus (Figure 2b) increases from 0.01 kPa with no polar polysiloxane, over 1.90 kPa (1 vol.% polar polysiloxane), and 8.98 kPa (15 vol.% polar polysiloxane) up to 62.20 kPa (30 vol.% polar polysiloxane). The increase in storage modulus is important, e.g. for 3D printing to have enough strength to hold the material deposited on top of the previous printed layer. For sufficient stability, a plateau storage modulus of, e.g., 10 kPa and above can be targeted. The second important measure, the yield-stress, increases in the same direction from a liquid without yield-stress (no polar polysiloxane) to yielding gels with a yield-stress of 30.2 Pa (1 vol.% polar polysiloxane), 74.1 Pa (15 vol.% polar polysiloxane) and 447 Pa (30 vol.% polar polysiloxane). The yield-stress is important to contain the shape after exiting the nozzle and is generally targeted for DIW to be above, e.g. 100 Pa.

The flow curve (Figure 2c) describes the apparent viscosity and shear-thinning behaviour of the inks. The viscosity increases with increasing polar polysiloxane, but additionally, the shear-thinning behavior changes. The shear-thinning behavior can be described by the Ostwald-de Waele model *η* = *Kγ̇*^{*n*-1} where lower numbers of the power-law index *n* correspond to higher pseudoplasticity desired for consistent direct ink writing. For the polysiloxane with 12.4 vol% filler, a stronger pseudoplasticity with higher amounts of polar polysiloxane is observed. The material without any polar polysiloxane behaves close to a Newtonian fluid (Figure 2c). The degree of pseudoplasticity is consequently low, with a high index *n* of 0.8. After adding 1 vol% polar polysiloxane, it shifts strongly to *n* = 0.21. The index decreases further with 15 vol% polar polysiloxane to *n* = 0.17 and with 30 vol% to *n* = 0.15. The last important printing measure is the recovery behaviour after shearing the ink, which should return to the original behavior after printing as fast as possible. Hereby, the three-interval thixotropy test (3iTT) shows that by increasing the polar polysiloxane concentration the recovery speed increases. While the composition with no polar polysiloxane does not return to the original viscosity within the observation time-frame, the one with 30 vol% polar polysiloxane recovers its initial viscosity within less than 4 seconds.

To further improve inks' printing parameters and decrease the mechanical losses of the crosslinked materials, the filler concentration was further decreased. The degree of pseudoplasticity can be further improved by decreasing the trimethylsilane functionalized fumed silica filler concentration to 6.3 vol%, while the polar polysiloxane volume content was 50 vol% (Figure 2e). The ink with 6.3 vol% filler and 50 vol% polar polysiloxanes had an index *n* ≈ 0.08. This is a very high degree of pseudoplasticity, in comparison to a similar printable ink achieved through the addition of significantly more filler and no polar polysiloxane. For example, an ink with 22.5 vol% silica filler and no polar polysiloxane has an index of *n* ≈ 0.32, showing a much lower degree of pseudoplasticity. Adding the 50 vol% polar polysiloxanes to the 6.3 vol% filler in PDMS increases the viscosity by four order magnitudes at a shear rate of 0.01 s⁻¹. The viscosity, as well as the shear-thinning, are higher for this formulation compared to the ink containing 22.5 vol% filler and no polar polysiloxane. Additionally, the ink with polar polysiloxanes also shows stronger shear thinning compared to the ink with 22.5 vol% filler. Consequently, the addition of polar polysiloxanes allows for a reduction of over 70% of filler, while improving processing parameters. A stronger shear thinning is highly desirable for direct ink writing, as well as other printing techniques such screen-printing, flexographic printing, gravure printing or inkjet printing, as the ink can be extruded or processed easier with less pressure build-up. Decreasing the filler concentration from 12.4 vol% to 6.3 vol% and 40 vol% polar polysiloxane reduces the plateau storage modulus (Figure 2e) from 71.6 kPa (12.4 vol% filler), over 52.7 kPa (9.8 vol% filler) down to 13.3 kPa (6.3 vol% filler). The yield-stress decreases in line from 403 Pa (12.4 vol% filler) down to 60.4 Pa (6.3 vol% filler). As the yield-stress of 60.4 Pa may be low for high print fidelity, a further increase of the polar polysiloxane to 50 vol% can again increase the storage modulus and yield-stress to 31.1 kPa and 192 Pa, respectively. Consequently, capillary suspensions form two immiscible polysiloxanes present a simple, yet effective way to tune ink parameters. The degree of pseudoplasticity, apparent viscosity, yield-stress, and storage modulus can be adjusted over a large range by tuning the filler and polar polysiloxane concentration simultaneously. This variability allows the rheological behavior to be tuned to different needs of a specific printing technique. Higher degrees of filler and polar polysiloxanes have thereby a similar but not exactly the same effect on the rheology. The capillary ink is not just a substitute for densely filled inks but shows a higher degree of pseudo plasticity compared to highly-filled polysiloxanes.

### Example 8: Direct ink writing (3D printing) of capillary suspensions

The 3D printability of the capillary inks into various arbitrary structures is demonstrated herein. A compliant electrode material and multi-material printing layered dielectric elastomer actuators were made (Figure 3). To highlight the printability of the materials, the capillary ink dielectric structures such as hollow cylinders, layered grid structures, hollow cones, or hollow cubes were made (Figure 3a). Due to the high degree of pseudo-plasticity, the materials were printed with a very low pressure of 0.7 bar and 22 mm/s with a nozzle of 400 µm. The image of the nozzle during and after printing shows that the material readily flows through the nozzle and the flow can be stopped without leaving threads at the nozzle. This is in contrast to prior art printable polysiloxanes that can lead to elastic recoil and significant pressure gradients during printing. Additionally, entangled polymer chains lead to threads dragging between the printed structure and the print head, which is undesirable. The high degree of pseudo-plasticity allows for easy and accurate printing and process control. The printed and cured structures are easily deformable due to their softness in all three dimensions and return to their original shape immediately after the force is released due to their high elasticity and low mechanical losses. The material can be printed with overhang and unsupported structures are possible, as seen in the cone example or the grid structure. In order to use multi-material printing to create stacked dielectric elastomer actuators, an electrode ink was developed as well. The multi-material printing switched between the electrode ink (12.5 wt% CB) and the capillary dielectric ink (Figure 3f). An image of the first layer without subsequent layers can be seen in Figure 3g while the final ten-layer stack dielectric elastomer actuator is depicted in Figure 3h. From the images, it becomes clear, that due to the printing process selected most of the defects and irregularities are placed on the outside and inactive part of the stack, where they should not affect actuation performance as severely as on the active part. After printing, the stacks were crosslinked and were subsequently tested.

### Example 9: Mechanical properties of the crosslinked materials

The advantages of the addition of polar polysiloxanes are not limited to the improved processability and tunable ink rheological properties. As discussed before, thermosets that are DIW printable generally possess relatively high moduli (> 1 MPa), high viscous losses (> 0.1 tan(δ)) alongside strong frequency and strain dependent properties due to the Mullins and Payne effect. These properties are undesired for DET applications. The addition of polar polysiloxanes improves the mechanical and optionally dielectric properties of the crosslinked elastomer. A further impact stems from the fact that the amount of filler can be reduced significantly compared to other printable polysiloxanes. Fillers have a reinforcing effect on the matrix leading to higher Young's moduli and increased mechanical losses; fillers are non-elastic and can convert the mechanical energy into thermal energy, through friction with each other and the elastomeric network. This loss is undesired, especially in repeated fast cyclic operations such as in dielectric elastomer transducers, where the conversion of mechanical into thermal energy can heat the device. The generated heat, in turn, deteriorates the electrical properties, such as the dielectric breakdown field, leading to increased aging effects. Consequently, a limited degree of filler is desired for soft and highly elastic materials with low mechanical losses. To illustrate the impact of the filler, three materials with similar printability are compared (Figure 4). The first has 1 vol.% polar content and 17.1 vol.% filler, the second has 30 vol.% polar content and 12.4 vol.% filler, and the last has the highest polar content of 50 vol.% and 6.3 vol.% filler. The SEM image (Figure 4a) shows that in contrast to previous reported polysiloxanes based capillary inks the processed and crosslinked dielectric is solid (no pores are present as none of the capillary liquids have to be removed).

By decreasing the filler content while simultaneously increasing the polar content, the storage modulus of the crosslinked material decreases from 2.381 MPa, over 1.275 MPa to 0.502 MPa (Figure 4b,c). The cyclic stress-strain curves also show that Mullin's effect as well as the hysteresis loop between each cycle are reduced by decreasing the filler concentration. The material containing 6.3 vol% filler and 50 vol% polar polysiloxane shows a significantly reduced Mullin's effect and no noticeable hysteresis loops between each two cycles, which is very unusual for a polysiloxane that can be printed using DIW. Besides the Mullins effect, the Payne effect is significantly lower as well, as seen in the strain sweep measurement (Figure 4b,d,e). This effect describes the reversible strain softening and is mostly attributed to filler-filler interactions, which are decreased at higher strains. Consequently, the lower filler amount reduces the amount of filler-filler interactions that are present in the composite. The decrease in storage modulus to higher strains can be observed for all samples (Figure 4c). Additionally, the typical hydrodynamic amplifications can be seen in an increase in a peak of the tan(δ) between 0.1-1% strain range (Figure 4b). Due to the Payne effect, the tan(δ) varies relatively strongly over the measured frequency range for high filler concentration (17.1 & 12.4 vol%). However, the ink containing 50 vol% polar polysiloxane and 6.3 vol% filler shows very small variations with strain, minimizing the Payne effect. The lower variation of 117 kPa (17.4%) in storage modulus allows for constant and easier control over the material properties at various strains. Importantly, not only the modulus, hysteresis loop, Mullin's & Payne effect is decreased by decreasing the filler concentration, but also the mechanical loss modulus is significantly lower for the material with the lowest filler content over all strain and frequency ranges (Figure 4b,e). The mechanical losses for the sample with 17.1 vol% filler between tan(δ) of 0.09-0.12 are almost double the losses of the sample with only 6.3 vol% filler with a tan(δ) between 0.05-0.06. The sample with 12.4 vol% filler is in between the two with a tan(δ) range of 0.075-0.11. In contrast to the strain sweep, the frequency sweep (Figure 4f) shows a typical stiffening effect of elastomers with increase in frequency. Again, the mechanical losses remain rather constant for the lowest filler concentration with values of tan(δ) 0.05-0.06, where the losses decrease significantly with higher frequencies for the materials with higher filler loadings. At higher frequencies, the increase in stiffness of the polymer chains leads to a decrease in losses. While this could be advantageous in reducing losses in DET applications, the strong increase in modulus would significantly change the operation conditions. The storage modulus of the material with the highest filler concentrations increased from 0.05 Hz to 10 Hz by 1.4 MPa (~45% increase). The material with 12.4 vol% filler concentration showed an increase in storage modulus of 0.6 MPa (~50% increase), while the material with the lowest filler concentration showed an increase in storage modulus of only 0.13 MPa (~25% increase) over the same frequency range. The material with the lowest filler content was further optimized by varying the crosslinker concentration (Figure 4g,h). With a higher crosslinker concentration, the modulus was increased to 917 kPa, while the loss factor stays approx. constant (Figure 4h). By decreasing the crosslinker concentration, the Young's modulus dropped to 265 kPa, however, the materials losses are increased to tan(δ) of ~0.1. While the tan(δ) increase is not desirable, it is still rather low compared to other printable materials, especially considering the low modulus of the material. The strain at break increases in line with the losses with decreasing crosslinker concentration from 100% to 170% maximum strain. Consequently, the material with the lowest filler amount and medium crosslinker amount shows a unique combination of DIW printability, softness, low mechanical losses, low Mullin's and Payne effects, and low hysteresis. As indicated in Figure 4b, the material reaches the desired areas for all the mechanical material parameters for DEAs. This is remarkable considering that it is difficult to achieve all these parameters simultaneously even for materials that are not DIW printable.

### Example 10: Dielectric properties of the final printed structures

Besides the mechanical properties, the addition of polar polysiloxanes also increases the dielectric relative permittivity of the crosslinked elastomer (Figure 5a). Here, the relative permittivity increases from 3.43 (1 vol% polar polysiloxane), over 6.72 (30 vol% polar polysiloxanes), to 11.39 (50 vol% polar polysiloxanes). The conductivity increases along the relative permittivity, which is a well-reported phenomenon. Nonetheless, the ion conductivity is still between 10⁻¹³-10⁻¹¹ S cm⁻¹ and thus in a typical range of good dielectric insulators. The dielectric losses increase with increasing relative permittivity and are frequency dependent. At AC frequencies below 100 Hz, the losses are similar for all samples and are due to electrode polarization. The losses are rather small at frequencies between 1 and 100 Hz, which is the most interesting window for operations of DEAs. All three materials exhibit the behavior of good capacitors with low resistive losses and a all show phase angels ϕ < -88, until electrode polarization sets in at frequencies below 1 Hz. Somewhat surprising is that all three materials have similar phase angel over the whole frequency range, with exception of the interfacial polarization process. This stands in contrast to previous works on polar polysiloxanes, where the increase in polar polysiloxanes often lead to higher capacitive losses. The creation of a discontinuous phase through the capillary suspension is responsible in this decrease of the resistive losses.

The major drawback from high- relative-permittivity polymers, is the well reported negative impact on the electrical breakdown field, which decreased compared to commercial PDMS with around 50-70 V µm⁻¹ (Figure 5c). The critical breakdown strength is lower however, it is higher compared to previously reported similar high- relative-permittivity polysiloxane composites. The electrical breakdown field was measured to be 21.93±1.57 V µm⁻¹ with a Weibull form factor of 6.80. However, if two crosslinkers are employed (a polar crosslinker and non-polar crosslinker) simultaneously, breakdown fields above 50 V µm⁻¹ where observed, which are unusually high for their high- relative-permittivity's. The ability to crosslink either one or both of the two liquid phases is a unique feature of the two immiscible phases that allows for a wide degree of tuning in parameters, that cannot be done with one phase systems.

## Claims

1. A shear thinning, optionally thixotropic, two-phase composition comprising
(i) a first phase comprising a liquid polysiloxane comprising D-type siloxane moieties, optionally PDMS, and optionally further comprising Q, T and/or M-type siloxane moieties,
(ii) a second phase comprising a liquid polar polysiloxane, optionally a polar cyclic polysiloxane, comprising M-, D- and/or T-type polar siloxane moieties, and
(iii) a filler.

2. The composition according to claim 1, wherein the liquid polysiloxane of the first phase (i) comprises siloxane moieties according to formula D 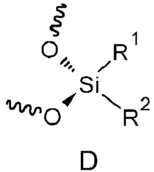 wherein
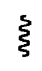 indicates a covalent siloxane bond to a silicon atom of another siloxane moiety, and
R¹ and R² are independently selected from the group consisting of hydrogen, methyl, ethyl, propyl, butyl, hexyl, heptyl, phenyl, cyclohexyl, vinyl, allyl, and cyclopentadienyl.

3. The composition according to claim 1 or 2, wherein the liquid polar polysiloxane of the second phase (ii) comprises of siloxane moieties according to formula A 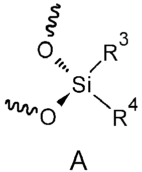 wherein
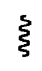 indicates a covalent siloxane bond to a silicon atom of another siloxane moiety,
R³ is selected from the group consisting of methyl, ethyl, propyl, butyl, hexyl, heptyl, phenyl, cyclohexyl, vinyl, allyl, cyclopentadienyl and R⁴, and
R⁴ is -[CₙH₂ₙ-S]ₓ-CₘH₂ₘ-Y, wherein
**x** is 0 or 1; n is 2 or 3; **m** is an integer from 0 to 4, and
**Y** is selected from the group consisting of 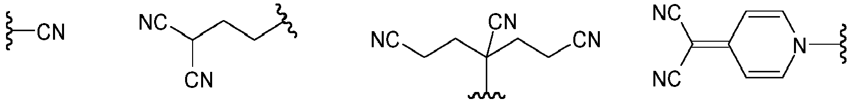 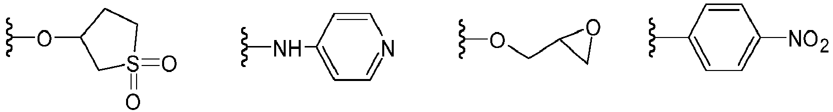 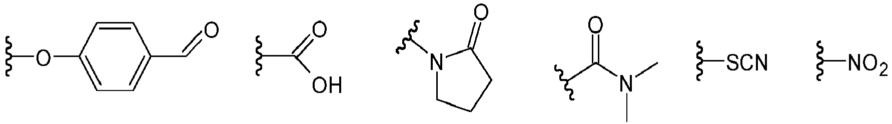 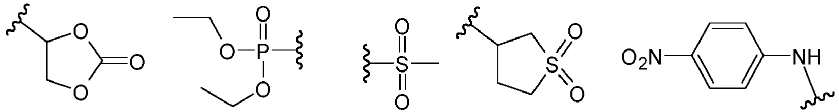 and 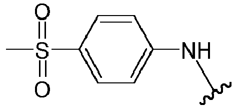
and optionally wherein the liquid polar polysiloxane of the second phase (ii) further comprises siloxane moieties according to formula D as defined in claim 2, optionally with the proviso that at least 20, 30 or 40 mol% of the siloxane moieties in the polysiloxane are according to formula A.

4. The composition according to any of claims 1 to 3, wherein
(i) the liquid polysiloxane of the first phase (i) is selected from the group consisting of PDMS, polymethylvinylsiloxane, polymethylphenylsiloxane, polydiphenylsiloxane, polydiethylsiloxane, poly(epoxycyclohexylethylmethyl)siloxane, and co-polymers and mixtures thereof, and/or
(ii) the liquid polar polysiloxane of the second phase (ii) is selected from the group consisting of poly(3,3-trifluoropropylmethylsiloxane), 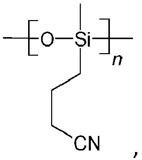 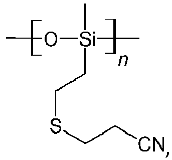 wherein n is an integer from 4 to 2000, optionally 4 to 200, optionally 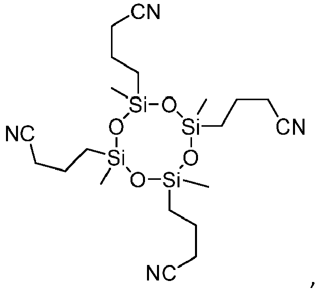 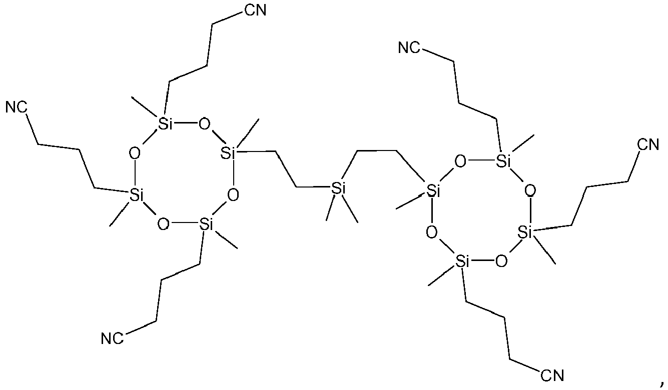 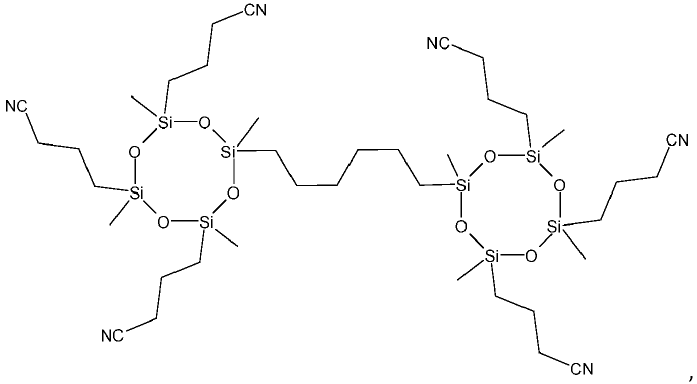 and

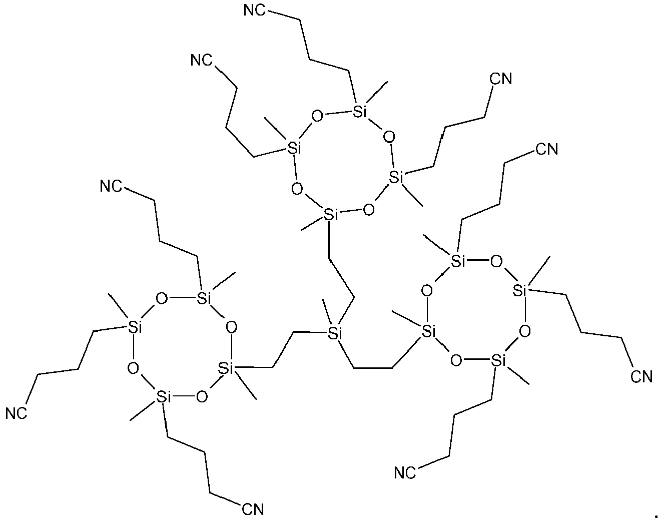

5. The composition according to any of claims 1 to 4, further comprising
(iv) a crosslinker for crosslinking the polysiloxane of the first and/or the second phase, optionally selected from the group consisting of polar or non-polar siloxanes containing hydrogen, vinyl, allyl, alkylthiol, amino alkyl, carboxy alkyl, or epoxy alkyl groups, optionally tetreaethoxysilane (TEOS), tetramethoxysilane (TMOS), triethoxysilane, triethoxymethylsilane, trimethoxysilane, trimethoxymethylsilane, 3-(cyanopropyl)triethoxysilane, 3-(cyanopropyl)trimethoxysilane, 3-(chloropropyl)triethoxysilane, 3-(chloropropyl)trimethoxysilane, and
(v) optionally a catalyst for crosslinking, optionally selected from the group consisting of dibutyltindilaureate (DBTL), platinum catalyst, Karsteadt's catalyst, Speier's catalyst, tetramethylammoniumhydroxide (TMAH), tetrbutylphosphonium hydroxide (TBPH), triphenylphosphin, and thermally and UV induced radical initiators.

6. The composition according to any of claims 1 to 5, wherein the polysiloxane of the first phase (i), optionally PDMS, has a molecular weight of 296 g/mol to 300000 g/mol, optionally 2 to 3.5 kg/mol, and/or an average of 4 to 5000 repeat units per chain, optionally 27 to 47 repeat units per chain.

7. The composition according to any of claims 1 to 6, wherein the filler is selected from the group consisting of dielectric, polymeric, silica, ceramic, boron nitride, copper, titanium oxide, aluminum oxide, barium titanate, ZnO, carbon, graphene, conductive, magnetic, and Li salts, optionally LiPF₆, LiBF₄, LiSbF₆, LiAsF₆, LiClO₄, LiCF₃SO₃. Li(CF₃SO₂)₂N, LiC₄F₉SO₃, LiAlO₂, LiAlCl₄, LiN(CₓF₂ₓ₊₁SO₂)(C_{y}F_{2y+1}SO₂), wherein x and y independently are an integer from 1 to 20, LiCl, Lil, and a mixture thereof.

8. The composition according to any of claims 1 to 7, wherein the composition comprises
(a) 1 to 99 vol%, optionally 1 to 50 vol%, of the polar polysiloxane of the second phase (ii) or 99 to 1 vol% of the polysiloxane of the first phase, optionally 99 to 50 vol%,
(b) a ratio of polysiloxane of the first phase to polar polysiloxane of the second phase (polar) between 99:1 to 1:99, optionally 99:1 to 1:1,
(c) 1 to 50 vol%, optionally 5 to 25 vol%, optionally 1 to 20 vol% or 1 to 10 vol% of the filler,
(d) 0.1 to 10 wt%, optionally 1 to 5 wt% of the optional crosslinker, and/or
(e) 0.01 to 5 wt%, optionally 0.1 to 2 wt% of the optional catalyst.

9. The composition according to any of claims 1 to 8, wherein the composition has at least one of:
(a) a yield-stress of at least 1 Pa, optionally 190 Pa or 400 Pa or higher,
(b) a storage modulus of at least 1 kPa, optionally 10 kPa, 30 kPa, 70 kPa or higher, and/or
(c) a degree of pseudo plasticity (Ostwald-de Waele model *η* = *Kγ̇*^{*n*-1}) *n* of 0.21 or lower, optionally of 0.17, 0.15, 0.08 or lower.

10. A composition according to any of claims 1 to 9, wherein the composition is crosslinked, optionally with a number of crosslinking sites per g of total polymer of 0.125 µmol/g to 74.55 µmol/g, optionally 1.25 µmol/g to 17.5 µmo!/g.

11. A method for the manufacture of a product comprising the following steps:
(I) Providing a composition according to any of claims 1 to 9,
(II) Mixing the composition of step (I),
(III) Forming a product with the composition, optionally by casting or printing, optionally through a tubing or nozzle, and
(IV) Optionally crosslinking the composition, optionally under heating, optionally at 30 to 150 °C, and/or under UV irradiation, optionally to a number of crosslinking sites per g of total polymer of 0.125 µmol/g to 74.55 µmol/g, optionally 1.25 µmol/g to 17.5 µmol/g.

12. The method according to claim 11, wherein in step (III) the product is formed by an extrusion-based process, optionally by direct ink writing, a co-extrusion process, screen printing, flexographic printing, inkjet printing, 3D printing techniques, gravure printing techniques, slot die coating or blade coating.

13. A product
(a) formed by crosslinking the composition of any of claims 1 to 9, optionally according to step (IV) of claim 11, optionally to a number of crosslinking sites per g of total polymer of 0.125 µmol/g to 74.55 µmol/g, optionally 1.25 µmol/g to 17.5 µmo!/g,
(b) obtainable or obtained by the method according to claims 11 or 12 excluding step (IV), optionally with a number of crosslinking sites per g of total polymer of less than 0.125 µmol/g to 74.55 µmol/g, optionally less than 1.25 µmo!/g to 17.5 µmol/g, optionally an ink, a three-dimensional, optionally hollow, product, a grid, an insulator, a capacitor, a battery, a light emitting device, a transistor, or a sensor, or
(c) obtainable or obtained by the method according to claims 11 or 12 including step (IV), optionally a three-dimensional, optionally hollow, product, a grid, an insulator, a dielectric elastomer transducer, a capacitor, a battery, a light emitting device, a transistor, or a sensor.

14. The composition or product according to any of claims 10, 13(a) or 13(c), wherein the composition or product has one or more of:
(a) a Young's modulus Y_{10%} of less than 3 MPa, optionally of less than 2 MPa, less than 1 MPa or about or less than 0.1 MPa,
(b) a mechanical loss tan(δ) of 0.12 or less at 1 Hz, optionally 0.1 or less or about or less than 0.055 at 1 Hz, and/or
(c) a relative permittivity of at least 3.4, 6.7 or 11.4 at 100 Hz AC or more.

15. A use of
(a) a composition according to any of claims 1 to 9 as an ink and/or for forming, optionally by casting or printing, a product, optionally a product according to claim 13, or
(b) a polar polysiloxane as defined in any of claims 1 to 9 as an additive in a shear thinning, optionally thixotropic and/or dielectric, two-phase ink, optionally in an ink comprising a first phase with a polysiloxane and a filler as defined in any of claims 1 to 9.
